Europäisches Patentamt

European Patent Office

Office européen des brevets

(11) Veröffentlichungsnummer: **0 206 992**
**B1**

(19)

(12) # EUROPÄISCHE PATENTSCHRIFT

(45) Veröffentlichungstag der Patentschrift: **12.09.90**

(51) Int. Cl.⁵: **B 65 G 1/04**

(21) Anmeldenummer: **86810252.6**

(22) Anmeldetag: **09.06.86**

(54) Lageranlage.

(30) Priorität: **19.06.85 CH 2596/85**

(43) Veröffentlichungstag der Anmeldung:
**30.12.86 Patentblatt 86/52**

(45) Bekanntmachung des Hinweises auf die
Patenterteilung:
**12.09.90 Patentblatt 90/37**

(84) Benannte Vertragsstaaten:
**AT BE CH DE FR GB IT LI LU NL SE**

(56) Entgegenhaltungen:
**EP-A-0 040 576**
**DE-A-3 333 584**
**FR-A-2 263 954**

(73) Patentinhaber: **Sieber, Hans**
**Alpsteinstrasse 4**
**CH-9524 Zuzwil (CH)**

(72) Erfinder: **Sieber, Hans**
**Alpsteinstrasse 4**
**CH-9524 Zuzwil (CH)**

(74) Vertreter: **Kulhavy, Sava, Dipl.-Ing.**
**Patentanwaltsbüro S.V. Kulhavy Postfach 450**
**Kornhausstrasse 3**
**CH-9001 St. Gallen (CH)**

Courier Press, Leamington Spa, England.

**Beschreibung**

Die vorliegende Erfindung betrifft eine Lageranlage mit wenigstens einer Palette für das Lagergut, die hintereinander angeordnete Sätze aus nebeneinander liegenden Zinken aufweist, wobei der Abstand zwischen den nebeneinander liegenden Zinken praktisch so gross ist wie die Breite eines der in der Palette unterzubringenden Stücke von Lagergut, und mit einer Betätigungseinrichtung, welche eine Vorrichtung zum Versetzen bzw. Uebertragen von Lagergut umfasst, wobei diese Vorrichtung mindestens einen Greifer für die Stücke von Lagergut aufweist, der hintereinander angeordnete Paare aus länglichen und vertikal verlaufenden Backen enthält.

Eine Lageranlagen dieser Gattung ist bereits bekannt, und sie ist beispielsweise in FR—A—2 263 954 offenbart. Die Greifer dieser bekannten Lageranlage bewegen sich oberhalb der Paletten, und zwar sogar in einem bestimmten Abstand von diesen. Das jeweilige Stück von Lagergut wird in den Spalt zwischen zwei benachbarten Zinken der Palette in der Weise gebracht, dass es in diesen Spalt fallen gelassen wird. Ein Stück von Lagergut kann mehrere, beispielsweise 30 Meter lang sein, und dabei ist es nur einige Zentimeter dick. Folglich ist der Spalt zwischen den Zinken ebenfalls bloss einige Zentimeter breit. Solche Zinkenpaare sind in bestimmten Abständen, beispielsweise von 1 Meter, entlang der Palette hintereinander angeordnet. Es gelingt wohl kaum oder nur selten, das so lange und so dünne Materialstück in die Spalte zwischen allen hintereinander liegenden Zinkenpaaren ohne weiteres fallen zu lassen.

Zudem müssen Mittel zur Abbremsung der in die Spalte fallenden Gegenstände vorgesehen sein. Diese sind in FR—A—2 263 954 ebenfalls beschrieben, und sie zeigen, dass eine solche Lageranlage ausserordentlich kompliziert ist und im Dauerbetrieb kaum störungsfrei arbeiten kann.

Weitere Probleme ergeben sich bei dieser vorbekannten Lageranlage bei der Entnahme der Materialstücke aus der Palette. Es sind Mittel vorgesehen, welche die Entnahme des jeweils zuunterst liegenden Materialstückes ermöglicht. Auch diese Mittel machen diese vorbekannte Lageranlage komliziert und somit störungsanfällig. Dies könnten Gründe dafür sein, dass die Lageranlage gemäss FR—A—2 263 594 keinen Eingang in die Praxis gefunden haben.

In EP—A—40 576 ist eine Lageranlage offenbart, welche mit U-förmigen Greifern für die Stücke von Materialgut ausgerüstet ist. Solche Greifer sind im Bereich des Steges der U-Form aufgehängt und durch die Enden der Schenkel der U-Form können Riegel hindurchgesteckt werden. Nachdem ein solcher Greifer auf aufeinander liegende Materialstücke aufgesetzt worden ist, wird der Riegel unter dem letzten der zu entnehmenden Stücke durch die Schenkel des Greifers von Hand hindurchgeführt. Danach kann der Greifer hochgehoben werden, wodurch die gewünschten Materialstücke der Palette entnommen wird. Solche Greifer sind in nur kleinen Lageranlagen anwendbar, wo sich eine Automatisation des Betriebes derselben noch nicht lohnt.

Die Aufgabe der vorliegenden Erfindung ist, eine Lageranlage zu schaffen, bei der die vorstehenden Nachteile nicht vorkommen.

Diese Aufgabe wird bei der Lageranlage der eingangs genannten Gattung erfindungsgemäss so gelöst, wie dies im kennzeichnenden Teil des Anspruchs 1 definiert ist.

Nachstehend werden Ausführungsbeispiele der vorliegenden Erfindung anhand der beiliegenden Zeichnungen näher erläutert. Es zeigt:

Fig. 1 eine Frontansicht der vorliegenden Lageranlage,

Fig. 2 einen horizontal geführten Schnitt durch die Lageranlage nach Fig. 1,

Fig. 3 einen vertikalen Schnitt durch eine der Kassetten, die in den Fächern der Lageranlage nach Fig. 1 untergebracht sein können,

Fig. 4 eine Draufsicht der Kassette nach Fig. 3,

Fig. 5 einen vertikalen Schnitt durch die rechte Endpartien der Kassette nach Fig. 4,

Fig. 6 in Frontansicht und teilweise im vertikalen Schnitt eine detailliertere Darstellung einer Einrichtung zur Handhabung des Inhaltes der Kassetten nach Fig. 3, die einen Bestandteil der Lageranlage nach Fig. 1 bildet,

Fig. 7 einen horizontalen Schnitt durch die linke Station der Einrichtung nach Fig. 6,

Fig. 8 einen horizontalen Schnitt durch eine der Förderbahnen einer Einrichtung zur Aufnahme des Kassetteninhaltes, die ebenfalls einen Bestandteil der Anlage nach Fig. 1 darstellt und

Fig. 9 schematisch und in einer Frontansicht eine Einrichtung zur Beschickung von Kassetten mit dem Lagergut.

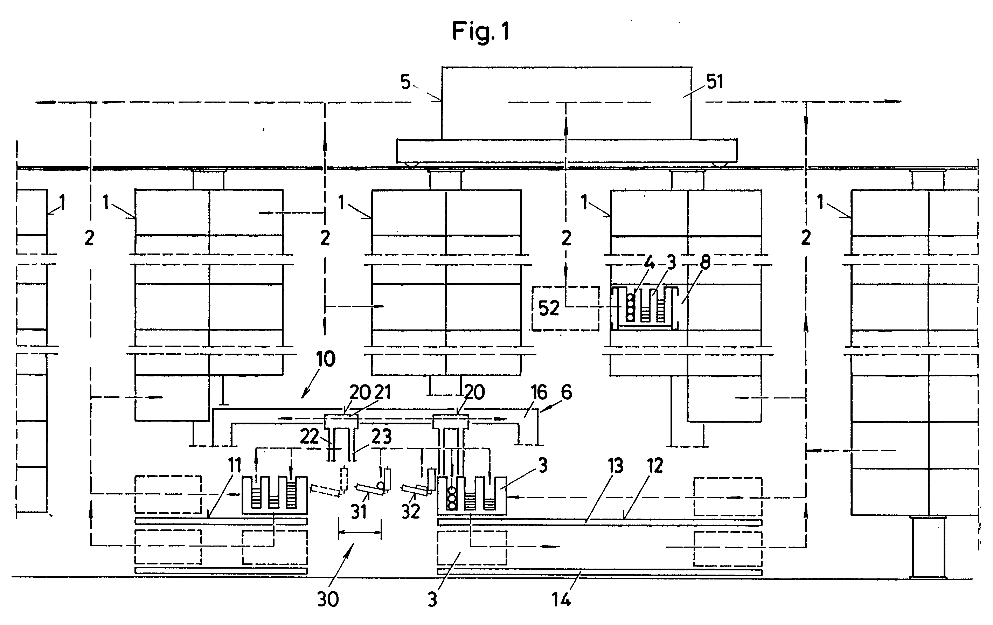

Die Lageranlage weist in einer Reihe angeordnete Regale 1 auf, die einander so zugeordnet sind, dass zwischen zwei Regalen 1 ein Gang 2 vorhanden ist. Die Regale 1 sind als Doppelregale ausgeführt, die paarweise Rücken an Rücken einander zugeordnet sind, wobei die Fächer 8 jedes dieser Regale 1 vom jeweiligen Gang 2 her zugänglich ist. In den Fächern 8 der Regale 1 befinden sich Paletten 3, in welchen das Lagergut 4 untergebracht ist. Von diesen Paletten 3, hier auch Kassetten genannt, ist in Fig. 1 nur eine einzige dargestellt. Das Lagergut 4 kann auch Langgut sein, wie z.B. Stabstahl, Stäbe aus Kunststoff oder dgl.

Die Lageranlage weist ferner eine Betätigungseinrichtung auf, welche aus mehreren Vorrichtungen besteht. Die Betätigungseinrichtung enthält eine Vorrichtung 5 zur Handhabung der Paletten 3. Diese Vorrichtung 5 weist einen über den Regalen 1 verfahrbaren Wagen 51 auf, an dessen Unterseite ein absenkbarer Palettengreifer 52 angeschlossen ist. Der Palettengreifer 52 kann als ein Hubtisch ausgeführt sein, der mit einer Vorrichtung zur Ergreifung einer der Kassetten 3 versehen ist. Da solche Vorrichtungen zur Handhabung von Kassetten 3 bereits bekannt sind, wird diese Vorrichtung 5 hier nicht näher beschrieben. Mit Hilfe dieser Kassetten-Handhabungsvorrichtung 5 können die Kassetten 3 durch die in der Zeichnung ganz links und ganz rechts dargestellten Gänge 2 bis in den Flurbereich der Lageranlage abgesenkt werden, wo sich weitere Teile der Betätigungseinrichtung befinden.

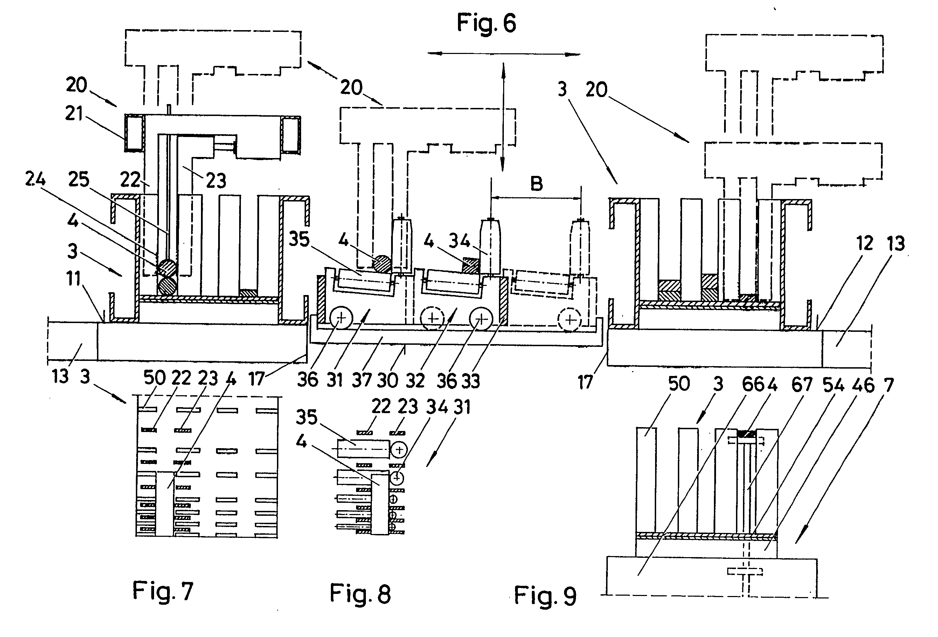

Die Betätigungseinrichtung enthält ferner eine Vorrichtung 6 zur Handhabung des Inhaltes 4 der Kassetten 3, die sich unterhalb der Regale 1 befindet. Da sich diese Vorrichtung 6 unter den Regalen 1 befindet, kann sie mit Hilfe der Kassetten-Handhabungsvorrichtung 5 ebenfalls bedient werden. Die Betätigungseinrichtung enthält auch eine Vorrichtung 7 zur Beladung von Kassetten 3 mit dem Lagergut 4. Diese Vorrichtung 7 ist in Fig. 9 schematisch dargestellt und sie befindet sich ausserhalb des Bereiches der Regale 1. Am vorteilhaftesten befindet sich die Beschickungsvorrichtung 7 an einem der Enden der Regalenreihe, wo die Kassetten 3 durch angeliefertes Gut 4 beladen werden können.

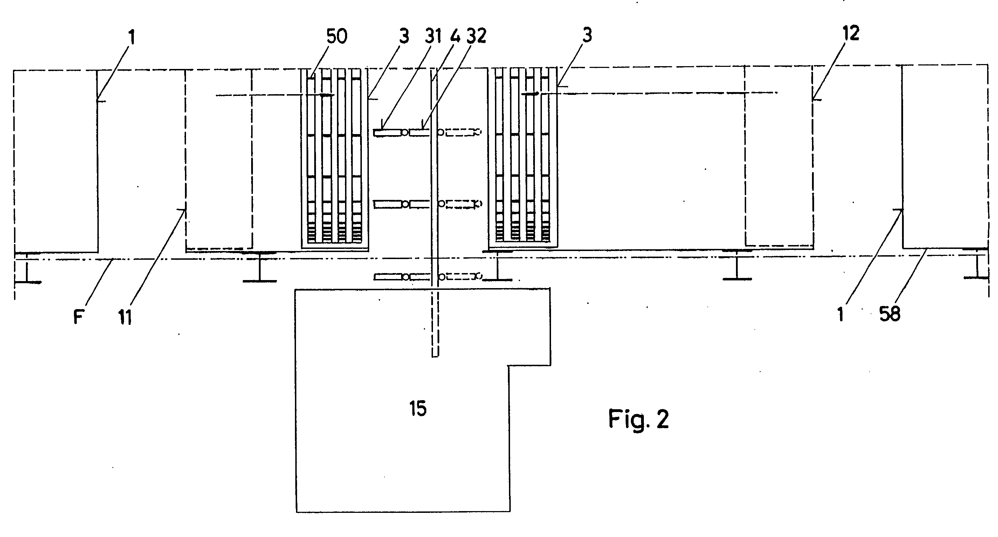

Die Vorrichtung 6 zur Handhabung des Kassetteninhaltes 4, die in Fig. 1 und 2 dargestellt ist, enthält zwei Tische 11 und 12, welche Rollenbahnen (nicht dargestellt) in den Tischplatten 13 und 14 aufweisen. Die erste Rollenbahn ist in der oberen Platte 13 des jeweiligen Tisches 11 bzw. 12 eingebaut, während die zweite Rollenbahn in der unteren Tischplatte 14 eingelassen ist. Die einander zugewandten Endpartien der Tische 11 und 12 sind mit einer Hubvorrichtung (nicht dargestellt) versehen, die die Absenkung der sich in diesem Bereich der Tische 11 bzw. 12 oben befindlichen Kassette 3 auf die untere Rollenbahn 14 ermöglicht. Die Vorrichtung 5 zur Handhabung von Paletten 3 setzt baladene Paletten 3 am äusseren Ende des jeweiligen Tisches 11 bzw. 12 auf die obere Rollenbahn 13 ab und sie nimmt die zu versorgende Palette 3 am äusseren Ende des jeweiligen Tisches von der unteren Rollenbahn 14 desselben auf. Solche Tische mit Rollenbahnen und Absenkvorrichtungen sind beispielsweise aus der schweizerschen Patentanmeldung Nr. 5688/84 desselben Anmelders bekannt.

Zwischen den einander zugewandten Endpartien der Tische 11 und 12 befindet sich eine Vorrichtung 10 zum Versetzen bzw. Uebertragen des sich in den Paletten 3 befindlichen Materials 4, um dieses einer weiteren Verarbeitung zuzuführen. Das Material 4 kann beispielsweise in einer Sägestation 15 (Fig. 2) zu Stücken von vorgegebener Länge zersägt werden. Da das Zersägen nur ein Beispiel für die Verarbeitung des Lagergutes 4 darstellt, und da solche Sägestationen allgemein bekannt sind, ist die Sägestation 15 hier nicht näher beschrieben. Der Rest des behandelten Materialstückes 4 kann mit Hilfe der Uebertragungsvorrichtung 10 in die Kassette 3 zurückgebracht werden, falls seine Länge nicht kleiner ist als eine vorgegebene minimale Länge. Das Materialstück mit den gewünschten Abmessungen wird dagegen in der Verarbeitungsstation 15 weiter abgegeben, beispielsweise zur weiteren Behandlung, zur Verpackung oder dgl.

Die Versetzungsvorrichtung 10 weist Führungsbahnen 16 auf, die etwa parallel zur Frontwand F (Fig. 2) der Lageranlage bzw. zur Frontseite 58 der Regale 1 angeordnet sind. Von diesen Führungsbahnen 16 ist nur die sich im Frontbereich F befindliche Führungsbahn 16 in Fig. 1 dargestellt. Denn die andere Führungsbahn befindet sich hinter der dargestellten Führungsbahn 16, im Bereich der Hinterwand der Anlage. Diese Bahnen 16 führen Materialgreifer 20, welche sich unter den Regalen 1 und in der Richtung der Regalenreihe bewegen können. Dem jeweiligen Tisch 11 bzw. 12 ist je einer der Materialgreifer 20 zugeordnet, die unabhängig voneinander arbeiten können. So kann die Zeitspanne, während welcher ein Materialstück 4 aus einer der Kassetten 3 bearbeitet wird, zur Bereitstellung eines weiteren Materialstückes 4 aus der anderen Kassette 3 ausgenützt werden, die am inneren Ende des gegenüberliegenden Tisches steht.

Die beiden Materialgreifer 20 sind praktisch gleich ausgeführt. Sie weisen einen Wagen 21 auf, der sich zwischen den Führungsbahnen 16, d.h. praktisch parallel zur Längsrichtung der Fächer 8 in den Regalen 1 erstreckt und der entlang den Führungsbahnen 16 bewegbar ist. Von der Unterseite des Wagens 21 weg erstrekken sich nebeneinander liegende und über die ganze Länge des Wagens 20 zwischen den Führungen 16 verteilte Paar von länglichen und vertikal verlaufenden Backen 22 und 23, die gegeneinander verschiebbar sind. Die Backen 22 und 23 dienen zur Ergreifung des jeweiligen Materialstückes 4. Zu diesem Zweck kann die Innenseite der Endpartien der Backen 22 und 23 mit Zacken 24 versehen sein, welche eine sichere Ergreifung des jeweiligen Materialstückes 4 sicherstellen sollen. Die Anzahl der sich zwischen den Führungen 16 befindlichen Backenpaare 22 und 23 ist so gewählt, dass möglichst kein Durchhang des gehandhabten Materialstückes 4 vorkommt. Wie im nachstehenden noch näher erläutert sein wird, sind die Abstände zwischen den benachbarten Backenpaaren 22 und 23 in einem der Endbereiche des Wagens 21, der beispielsweise im Frontbereich F der Regale 1 liegt, kleiner als die Abstände zwischen den benachbarten Backenpaaren im gegenüberliegenden Endbereich des Wagens 21, d.h. im Bereich der hinteren Stirnwand der Regale 1. Zudem können die Backenpaar-Abstände so gewählt sein, dass die Grösse dieser Abstände mit zunehmendem Abstand von der Frontseite F der Regale 1 stetig oder sprunghaft zunimmt oder aber abnimmt. Zwischen den Backen 22 und 23 befindet sich eine vertikal verstellbare Stange 25, welche auf der Oberseite des jeweils zu ergreifenden Gegenstandes 4 aufliegt. Mit Hilfe dieser Stange 25 kann die Tiefe des Eindringens der Backen 22 und 23 in die jeweilige Kassette 3 festgestellt aber auch gesteuert werden.

Zwischen den Rollentischen 11 und 12 befindet sich eine Vorrichtung 30 zur Aufnahme von zu verarbeitendem Lagergut 4. Diese Vorrichtung 30 enthält zwei Förderbahnen 31 und 32, die parallel zueinander verlaufen und die sich zwischen der Frontwand F und der Hinterwand der Regale 1 erstrecken. Diese Förderbahnen 31 bzw. 32 weisen einen gemeinsamen Rahmen 33 auf, an dem je eine Reihe 34 von vertikal angeordneten, angetriebenen Rollen sowie je eine Reihe 35 von etwa horizontal angeordneten und ebenfalls angetriebenen Rollen angebracht ist. Der Rahmen 33 ist mit Rädern 36 versehen, die auf Schienen 37 abrollen. Auf den leicht geneigt angeordneten horizontalen Rollen 35 der beiden Förderbahnen 31 und 32 ruht je ein Materialstück 4, wobei das Materialstück 4 in der linken Förderbahn 31 einen runden Querschnitt aufweist, während das Materialstück 4 in der rechten Förderbahn 32 einen quadratischen Querschnitt hat.

Links und rechts von dieser Aufnahmevorrichtung 30 befindet sich je eine Kassette 3, die auf der inneren Endpartie der oberen Platte 13 des Tisches 11 bzw. 12 aufgestellt ist. Die jeweilige Förderbahn 31 bzw. 32 weist eine Breite B auf. Der Abstand zwischen den inneren Stirnseiten 17 der Tische 11 und 12 ist so bemessen, dass er grösser ist als drei Breiten B einer Fördervorrichtung 31 bzw. 32. Dies ermöglicht, dass eine der Förderbahnen 31 oder 32 sich immer in der Mitte zwischen den Tischen 11 und 12 befindet, wo sie der Station 15 für die Bearbeitung der Materialstücke 4 gegenübersteht. Das in dieser Förderbahn befindliche Materialstück 4, in Fig. 6 ist dies ein Materialstück mit etwa quadratischem Querschnitt in der zweiten Förderbahn 32, kann durch die angetriebenen Rollen 34 und 35 in die Bearbeitungsstation 15 so weit vorgeschoben werden, bis sich die gewünschte Länge des Materialstückes 4 in der Station 15 befindet, die bearbeit werden soll. Die andere Förderbahn 31 befindet sich in diesem Fall dicht an der links liegenden Kassette 3. Während das genannte Materialstück 4 in der Station 15 bearbeitet wird, wird die linke Förderbahn 31 mit einem der Materialstücke 4 mittels der linken Uebertragungsvorrichtung bzw. des linken Materialgreifers 20 beladen. Dieses Materialstück 4 hat einen runden Querschnitt. Der linke Materialgreifer 20 ist, wenn er sich in seiner für die Ablegung des Materialstückes 4 in die Förderbahn 31 erforderlichen Lage befindet, in Fig. 6 strichliert angedeutet.

Nach Beendigung des genannten Bearbeitungsprozesses wird der Rest des erstgenannten Materialstückes 4 von quadratischem Querschnitt in die zweite Förderbahn 32 zurückgezogen und die Bahnen 31 und 32 können als ein Ganzes nach rechts verschoben werden, bis die rechte Förderbahn 32 dicht an der Stirnseite 17 des rechten Rollentisches 12 steht. Zugleich verschob sich die linke Förderbahn 31 so, dass das Materialstück 4 von rundem Querschnitt in dieser linken Förderbahn 31 nunmehr gegenüber der Station 15 steht und hier bearbeitet werden kann. Während dieser Zeitspanne kann der Rest des bereits behandelten Materialstückes 4 in die rechts stehende Kassette 4 abgelagert werden. Nun kann diese Kassette 3 auf das Niveau der unteren Platte 14 des Tisches 12 abgesenkt werden, so dass sie einer weiteren und auf der oberen Platte 13 bereits anstehenden Palette 3 dadurch Platz macht. Nachdem diese weitere Palette 3 bis ans Ende des Tisches 12 vorgeschoben wurde, kann dieser ein bestimmtes Materialstück 4 mittels des rechten Materialgreifers 20 entnommen werden. Dieses noch unbearbeitete Materialstück 4 wird in die rechte Förderbahn 32 abgelegt. Nachdem das Materialstück 4 mit dem runden Querschnitt in der Station 15 bearbeitet worden ist, wird der Rest dieses in die erste Förderbahn 31 zurückgezogen und der Verbund aus den Förderbahnen 31 und 32 kann nach links verschoben werden. Hierbei gelangt das Materialstück 4 aus der rechten Förderbahn 32 zur Bearbeitungsstation 15 und es kann bearbeitet werden, während die linke Förderbahn 31 mit einem neuen Materialstück 4 beliefert wird, usw.

Die beschriebene Arbeitsweise der vorliegenden Lageranlage setzt voraus, dass Auskünfte über die einzelnen Materialstücke 4, wie z.B. über die Form, Abmessungen derselben, über die Lage jedes von diesen Stücken 4 in den Kassetten 3 sowie über die Lage der einzelnen Kassetten 3 in den Regalen 1 gespeichert sind. Nach dem bisherigen Stand der Technik war es ohne weiteres möglich, die Positionen einzelner Kassetten 3 in den Regalen 1 einer Lageranlage zu speichern, und wenn gewünscht, die jeweilige Kassette dann auszulagern. Im Prinzip war es auch möglich, Auskünfte über die Eigenschaften der gelagerten Materialstücke 4 zu speichern. Es war jedoch nicht möglich, das gewünschte Materialstück 4 in automatischer Weise zu finden, weil die Materialstücke 4 in den Kassetten 3 ungeordnet abgelegt wurden. Deswegen war immer eine Person nötig, welche aufgrund der Sichtauswertung der Abmessungen der in einer Kassette 3 abgelegten Materialstücke das geeignete Stück auswählte. Ein automatische Wiederauffindung eines bestimmten Materialstückes in einer Kassette ist die Voraussetzung dafür, dass die Bearbeitung der in einer Lageranlage gelagerten Materialstücke automatisch durgeführt werden kann. Die nachstehend beschriebene Kassette macht eine vollautomatische Handhabung gelagerter Materialstücke möglich.

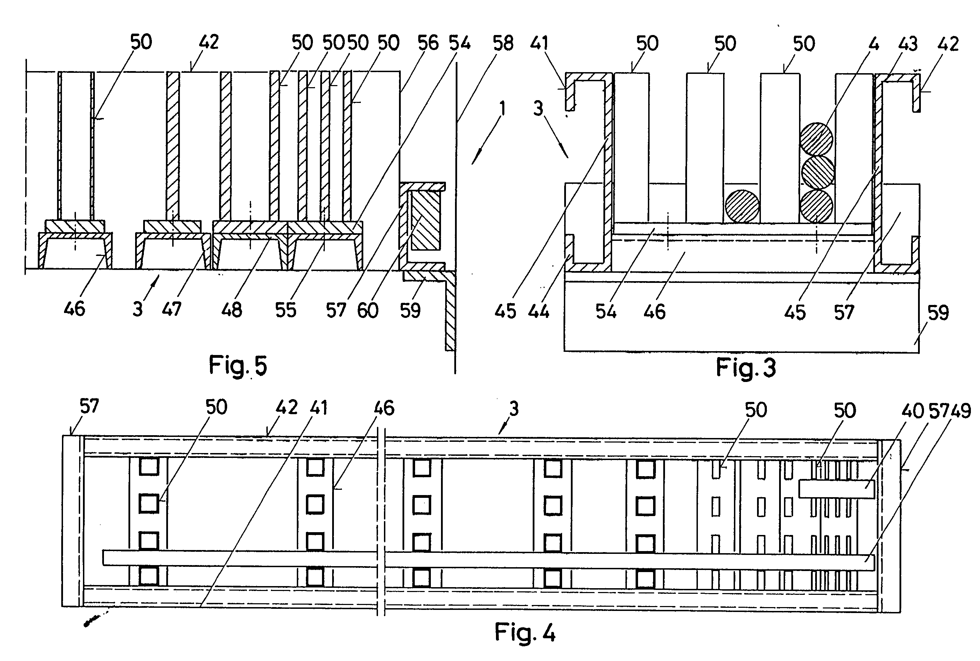

Die Kassette 3, die in den Fig. 3 bis 5 dargestellt ist, weist Seitenwände 41 und 42 auf, welche durch Blechbahnen mit verformten Längsrändern 43 und 44 gebildet sind. Die Blechbahnen weisen ein C-Profil auf, wie dies vor allem aus Fig. 3 ersichtlich ist, welche die Kassette 3 in einem vertikalen Querschnitt zeigt. Die verformten Randpartien 43 und 44 der jeweiligen Blechbahn, welche eine Versteifung bewirken, befinden sich an der Aussenseite der Kassette 3, so dass dem Inneren der Kassette 3 die glatte Rückseite eines die verformten Randpartien 43 und 44 verbindenden Steges 45 zugewandt ist. Die Kassette 3 ist so lang ausgebildet, dass sie auch das längste Materialstück 4 aufnehmen kann. In der Regel sind die Kassetten etwa 6 Meter lang, wobei die Blechbahnen 41 und 42 sich über die ganze Länge der Kassette 3 erstrecken.

Im unteren Bereich der Kassette 3 erstrecken sich zwischen den Stegen 45 der Seitenwände 41 und 42 Verbindungsstücke 46, welche die Seitenwände 41 und 42 zusammenhalten und welche zugleich den Boden der Kassette 3 bilden, auf dem das Lagergut 4 ruht. Die Verbindungsstücke 46 sind als U-Profile ausgeführt, wobei die Schenkel 4/ dieses U-Profils 46, die sich zwischen den Seitenwänden 41 und 42 erstrecken, nach unten gerichtet sind. Solche Verbindungsstücke 46 können beispielsweise durch Schweissen mit den Seitenwänden 41 und 42 verbunden sein. Von den den Boden der Kassette 3 bildenden Verbindungstücken 46 weg erstrecken sich Zinken 50, die sich in dem zur Aufnahme der Materialstücke 4 bestimmten Raum der Kassette 3 befinden. Der Abstand der Zinken 50 voneinander bzw. zwischen einem der Zinken 50 und der Wand 41 bzw. 42 der Kassette 3 ist mindestens so gross wie die Dicke bzw. Breite eines der in der Kassette 3 zu lagernden Gegenstandes 4. Dies hat zur Folge, dass die einzelnen Gegenstände bzw. Materialstücke 4 nur aufeinanderliegend in der Kassette 3 angeordnet sein können.

Um den Abstand der Zinken 50 voneinander an die Breite der jeweiligen Materialstücke 4 anpassen zu können, sind die Zinken 50 auf Fussplatten 54 befestigt und die jeweilige Fussplatte 54 kann mit Hilfe von Schrauben 55 auf dem Steg 48 eines der Verbindungsstücke 46 auswechselbar befestigt sei. Da das Verbindungsstück 46 nach unten offen ist, sind die Schrauben 55 leicht zugänglich und ein Zinkensatz kann daher durch einen Zinkensatz mit anderen Zinkenabständen leicht ersetzt werden.

Aus Fig. 5 ist auch ersichtlich, dass die Zinken 50 entweder aus einem vollen Material oder auch aus einem Hohlprofil ausgeführt sein können. Links in Fig. 5 ist ein Zinken 50 aus einem Hohlprofil dargestellt. Es können sich auch mehrere Zinken 50 hintereinander auf einer einzigen Fussplatte 54 befinden. Dadurch erreicht man unter anderem eine grössere Haltekraft der Zinken 50, wenn diese aus einem verhältnismässig dunnen Material sind.

Die Breite der Zinken 50 ist so gewählt, dass sie grösser ist als die Breite der Backen 22 und 23 des Materialgreifers 20. Die Backen 22 und 23 können daher in die Kassette 3 einfahren, um einen oder mehrere der Gegenstände 4 ergreifen zu können. Die Messstange 25 (Fig. 6) steuert dabei das Eindringen der Backen 22 und 23 in die Kassette 3 so, dass wahlweise nur ein einziger Gegenstand 4 oder eine vorbestimmte Anzahl derselben durch die Backen 22 und 23 ergriffen wird. Dies ist ohne weiteres möglich, weil in der Steuereinrichtung der Lageranlage unter anderem gespeichert ist, wie gross die Dicke bzw. Höhe der im jeweiligen Spalt zwischen benachbarten Zinken 50 einer bestimmten Kassette 3 liegenden Gegenstände 4 ist.

Die sich in einer Kassette 3 befindlichen Gegenstände 4 können auch verschiedene Längen aufweisen. Um die Menge von Abfall möglichst klein zu halten, gelangen in den Abfall erst jene Materialstücke 4, deren Länge kleiner ist als 100 mm. Für die Halterung auch jener Materialstücke 4 in der Kassette 3, welche diese minimale Länge nur wenig überschreiten, müsste man die Verbindungstücke 46 samt den Zinken 50 über die Länge der Kassette 3 sehr dicht verteilen. Dies würde eine Kassette 3 ergeben, deren Eigengewicht bereits sehr beträchtlich wäre. Um dies zu verhindern, sind die Abstände der hintereinander liegenden Zinken 50 bzw. Zinkengruppen in einem der Endbereiche der Kassette 3 kleiner als im gegenüberliegenden Endbereich derselben. Eine solche Verteilung der Zinken 50 ist vor allem aus Fig. 4 ersichtlich. Es gilt die Regel, dass alle Materialstücke 4 bzw. 40 und 49 so abgelegt werden sollen, dass sie im rechten Endbereich der Kassette 3 bündig liegen. In diesem Endbereich sind die Abstände zwischen den hintereinander liegenden Zinken 50 klein, so dass auch die kurzen Materialstücke 40 in der Kassette 3 sicher gehaltert werden. In den gegenüberliegenden Endbereich der Kassette 3 gelangen nur die langen Materialstücke 49, die durch die sich in grösseren Abständen befindlichen Zinken 50 ausreichend gehaltert sind.

Der rechte Endbereich der Kassette 3 ist in Fig. 5 in einem vertikalen Längsschnitt dargestellt. Hieraus ist unter anderem ersichtlich, dass die Stirnwand 56 der Kassette 3 mit einem sich seitlich öffnenden U-Profil-Stück 57 versehen ist. In Fig. 5 ist auch die Frontwand 58 eines der Regale 1 angedeutet. Die Innenseite der Regalwand 58 ist mit einem L-förmigen Träger 59 versehen, auf dem das U-Stück 57 und somit auch der restliche Teil der Kassette 3 ruht. Es versteht sich, dass auch das andere Ende der Kassette 3 mit einem U-Stück 57 versehen ist, wie dies aus Fig. 4 ersichtlich ist, und dass dieses U-Stück 57 auf einem entsprechenden Träger 59 ruht, der an der Innenseite der Regalhinterwand angebracht ist. In Fig. 5 ist noch ein Ausleger 60 in Querschnitt dargestellt, der einen Bestandteil des Palettengreifers 52 darstellt. Dieser Ausleger 60 ist aus dem Palettengreifer 52 ausfahrbar, wenn dieser einer auszulagernden Palette 3 gegenübersteht. Der Ausleger 60 gelangt mit dem U-Stück 57 in Eingriff und wird angehoben. Dadurch wird die Palette 3 von den Trägern 59 abgehoben und sie kann auf der Oberseite des Palettengreifgerätes 52 abgesetzt werden.

In Fig. 7 ist die in Fig. 6 links gezeigte Kassette 3 in Draufsicht dargestellt. Hieraus ist ersichtlich, dass die Abstände zwischen den sich hintereinander befindlichen Zinken 50 mit dem zunehmenden Abstand der Zinken 50 vom Frontende der Palette 3 zunehmen. Dementsprechend sind aber auch die Abstände zwischen den hintereinander liegenden Backen 22 und 23 des Materialgreifers 20 gewählt, die in Fig. 7 in einem horizontalen Schnitt dargestellt sind und die zur Entnahme des zuoberst liegenden Materialstückes 4 in die Kassette 3 eingefahren sind.

In Fig. 8 ist die linke Förderbahn 31 schematisch und in Draufsicht dargestellt. Die am Rahmen 33 angebrachten und hintereinander liegenden Rollen 34 und 35 weisen ebenfalls unterschiedliche Abstände entsprechend den Abständen zwischen den Backenpaaren 22 und 23 auf, wie dies im Zusammenhang mit den Fig. 4 bis 7 erläutert worden ist. Unter Umständen können die hintereinander liegenden Rollen unterschiedliche Durchmesser aufweisen.

In Fig. 9 ist eine Vorrichtung 7 zur Beschickung der Kassetten 3 mit dem Lagergut 4 schematisch und in einer Frontansicht dargestellt. Diese Beschickungsvorrichtung 7 befindet sich vorteilhaft an einem der Enden der Reihe von Regalen 1, wo die Kassetten 3 mit Hilfe der Vorrichtung 5 angeliefert werden können und wo sie mit neuem Material 4 gefüllt werden können. Wie bereits gesagt worden ist, kann es sich um Materialstücke 4 handeln, die sehr lang und auch sehr schwer sind. In diesem Fall ist es nicht leicht, die einzelnen Stücke 4 aufeinander gestapelt in den jeweiligen Spalt zwischen zwei Reihen von Zinken 50 zu bringen. Die Beschickungsvorrichtung 7 weist einen Ständer 66 auf, auf dem die zu beschickende Kassette 3 aufgestellt werden kann. Aus dem Ständer 66 ist wenigstens eine Reihe von Stempeln 67 vertikal ausfahrbar, von welchen nur der erste Stempel in Fig. 9 dargestellt ist. Die einzelnen Stempel 67 gelangen zwischen den Verbindungsstücken 46 der Kassette 3 und zwischen zwei benachbarten Zinken 50 durch das Innere der Kassette 3 bis zum oberen Rand derselben. Auf die Stirnfläche der Stempel 67 werden einzelne Materialstücke 4 aufgestapelt, von welchen in Fig. 1 nur das zuunterst liegende Stück 4 gezeigt ist. Anschliessend werden die über die ganze Länge der Kassette 3 verteilten Stempel 67 abgesenkt, so dass der Materialstapel zwischen zwei Reihen diesen Stapel seitlich führenden Zinken 50 gelangt. Hierbei wird in der Steuereinrichtung der Lageranlage gespeichert, welches Materialstück sich an welcher Stelle dieser Kassette 3 befindet, damit dieses später automatisch gefunden werden kann. Hiernach kann die beladene Kassette 3 mit Hilfe der Vorrichtung 5 in einem der Fächer 8 der Regale 1 untergebracht werden.

**Patentansprüche**

1. Lageranlage mit wenigstens einer Palette (3) für das Lagergut, die hintereinander angeordnete Sätze aus nebeneinander liegenden Zinken (50) aufweist, wobei der Abstand zwischen den nebeneinander liegenden Zinken praktisch so gross ist wie die Breite eines der in der Palette unterzubringenden Stücke (4) von Lagergut, und mit einer Betätigungseinrichtung, welche eine Vorrichtung (10) zum Versetzen bzw. Uebertragen von Lagergut (4) umfasst, wobei diese Vorrichtung (10) mindestens einen Greifer (20) für die Stücke (4) von Lagergut aufweist, der hintereinander angeordnete Paare aus länglichen und vertikal verlaufenden Backen (22, 23) enthält, dadurch gekennzeichnet, dass die Backen (22, 23) in das Innere der Palette (3) absenkbar sind, dass die Breite der jeweiligen Backe (22 bzw. 23) kleiner ist als die Breite des Zinkens (50) in der Kassette (3), dass der Abstand zwischen den Backen verstellbar ist, dass die Länge der gegeneinander verstellbaren Backen so bemessen ist, dass sie auch das in der Palette zuunterst liegende Materialstück ergreifen können, und dass die einander gegenüberliegenden Seitenflächen der Backen (22, 23) zur Ergreifung von Lagergut (4) ausgebildet sind.

2. Lageranlage nach Anspruch 1, dadurch gekennzeichnet, dass sie Regale (1) mit übereinander angeordneten Fächern (8) aufweist, in welchen die Paletten (3) untergebracht sein können, dass zwischen den Regalen Gänge (2) vorhanden sind, dass die Betätigungseinrichtung ferner eine Vorrichtung (5) zur Handhabung der Paletten (3) umfasst, dass diese Vorrichtung (5) einen über den Regalen (1) verfahrbaren Wagen (51) aufweist, an dessen Unterseite ein absenkbarer Palettengreifer (52) angeschlossen ist, dass der Palettengreifer (52) mit Mitteln (60) zur Ergreifung einer Palette (3) versehen ist, dass der Palettengreifer (52) in die Gänge (2) absenkbar ist und dass zumindest einer der Gänge derart ausgeführt ist, dass der Palettengreifer (52) in diesem bis in den Flurbereich der Lageranlage abgesenkt werden kann.

3. Lageranlage nach Anspruch 1, dadurch gekennzeichnet, dass die Betätigungseinrichtung eine Vorrichtung (6) zur Handhabung des Paletteninhaltes (4) umfasst, dass diese Vorrichtung (6) Tische (11, 12) zur Aufnahme der Paletten (3) aufweist, dass auf diesen Tischen mehrere Paletten (3) hintereinander stehen können, dass die Tische (11, 12) sich in einem Abstand voneinander befinden, dass zwischen den Tischen (11, 12) sich eine Vorrichtung (30) zur Aufnahme von zu verarbeitendem Lagergut befindet, dass über den einander zugewandten Endpartien der Tische (11, 12) die Vorrichtung (10) zum Versetzen bzw. Uebertragen des Materials (4) angeordnet ist und dass der Aufnahmevorrichtung (30) eine Station (15) zur Verarbeitung des Lagerguts (4) zugeordnet ist.

4. Lageranlage nach Anspruch 3, dadurch gekennzeichnet, dass jedem der Tische (11, 12) wenigstens einer der Materialgreifer (20) zugeordnet ist, dass die Versetzungsvorrichtung (10) ferner Bahnen (16) zur Führung der Materialgreifer (20) aufweist, dass die Führungsbahnen (16) sich praktisch parallel zu den Stirnseiten (58) der Regale (1) erstrecken, dass der Greifer (20) einen Wagen (21) aufweist, der sich parallel zur Längsrichtung des Ganges (2) zwischen den Regalen (1) erstreckt, und dass von der Unterseite des Wagens (21) weg die Greiferbacken (22, 23) abstehen.

5. Lageranlage nach Anspruch 4, dadurch gekennzeichnet, dass die Abstände zwischen den in der Längsrichtung des Wagens (21) hintereinander liegenden Backenpaaren (22, 23) in einem der Bereiche des Wagens (21) kleiner sind als im übrigen Bereich desselben, wobei diese Abstände so gewählt sein können, dass sie mit dem zunehmenden Abstand von einem der Endbereiche des Wagens zunehmen, und zwar stetig oder sprunghaft.

6. Lageranlage nach Anspruch 1, dadurch gekennzeichnet, dass zwischen den Backen (22, 23) wenigstens eines der Backenpaare sich eine vertikal verlaufende und verstellbare Stange (25) befindet, dass diese Stange (25) zur Auflage auf dem zwischen den Backen oben liegenden Gegenstand (4) ausgebildet ist und dass diese Stange (25) an eine Vorrichtung angeschlossen ist, welche zur Feststellung der Anzahl der sich zwischen den Backen befindlichen Gegenstände ausgebildet ist.

7. Lageranlage nach Anspruch 3, dadurch gekennzeichnet, dass die Aufnahmevorrichtung (30) zwei Förderbahnen (31, 32) enthält, die parallel zueinander verlaufen und die sich parktisch zwischen der Frontwand (F) und der Hinterwand der Regale (1) erstrecken, dass diese Förderbahnen (31, 32) einen gemeinsamen Rahmen (33) aufweisen, an dem sie befestigt sind, dass jede Förderbahn (31 bzw. 32) einen Satz von vertikal angeordneten und sich in einer Reihe befindlichen Rollen (34) sowie einen Satz von praktisch horizontal angeordneten und ebenfalls eine Reihe bildenden Rollen (35) aufweist und dass der Rahmen so ausgeführt ist, dass dieser samt den Förderbahnen (31, 32) zwischen den Rollentischen (11, 12) hin und her bewegt werden kann.

8. Lageranlage nach Anspruch 7, dadurch gekennzeichnet, dass der Abstand zwischen den inneren Stirnseiten (17) der Rollentische (11, 12) so bemessen ist, dass er grösser ist als drei Breiten einer der Förderbahnen (31 bzw. 32), und dass die Eintrittspartie der Verarbeitungsstation (15) für das Lagergut (4) sich praktisch in der Mitte des genannten Abstandes zwischen den Stirnflächen (17) der Rollentische befindet.

9. Lageranlage nach Anspruch 1, dadurch gekennzeichnet, dass die Abstände zwischen den Sätzen aus nebeneinander liegenden Zinken (50) in einem der Bereiche der Palette (3) kleiner sind als im übrigen Bereich derselben, wobei diese Abstände so gewählt sein können, dass sie mit dem zunehmenden Abstand von einem der Endbereiche der Palette zunehmen, und zwar stetig oder sprunghalft.

10. Lageranlage nach Anspruch 1, dadurch gekennzeichnet, dass die Palette (3) Seitenwände (41, 42) aufweist, zwischen welchen sich die Zinken (50) bzw. Zinkensätz befinden, dass die Seitenwände mittels sich in Abständen voneinander befindlichen Verbindungsstücke (46) untereinander verbunden sind und dass die Zinken (50) auf diesen Verbindungsstücken angeordnet sind.

11. Lageranlage nach Anspruch 10, dadurch gekennzeichnet, dass die Verbindungsstücke (46) im Querschnitt U-förmig sind, wobei die Schenkel (47) dieses Profils nach unten gerichtet sind, dass auf der Aussenseite des Steges (48) der Verbindungsstücke (46) die Zinken (50) angebracht sind, wobei der Abstand zwischen zwei sich auf einem Verbindungsstück (46) befindlichen Zinken bzw. zwischen einem dieser Zinken und der anliegenden Seitenwand (41 bzw. 42) mindestens so gross wie die Dicke des dazwischen zu lagernden Gegenstandes ist.

12. Lageranlage nach Anspruch 11, dadurch gekennzeichnet, dass der Unterteil der Zinken (50) auf einer Fussplatte (54) befestigt ist, dass auf der Fussplatte (54) wenigstens ein Zinken befestigt ist, wobei mehrere Zinken nebeneinander oder/und hintereinander auf der Fussplatte befestigt sein können, dass der jeweilige Zinken aus vollem Material oder aus einem Hohlprofil sein kann und dass die Fussplatte (54) auf dem Steg (48) des Verbindungsstückes (46) verstellbar und auswechselbar befestigt ist.

13. Lageranlage nach Anspruch 10, dadurch gekennzeichnet, dass die Seitenwände (41, 42) durch Blechbahnen mit verformten Längsrändern (43, 44) gebildet sind, dass diese verformten Partien (43, 44) an der Aussenseite der Palette liegen und dass an die Stege (45), welche die verformten Randpartien (43, 44) der Blechbahnen (41, 42) verbinden, sich die Verbindungsstücke (46) anschliessen.

14. Lageranlage nach Anspruch 2, dadurch gekennzeichnet, dass die jeweilige Stirnwand (56) der Kassette (3) mit einem sich seitlich öffnenden U-Profilstück (57) versehen ist, dass die Innenseite der Regelwand (58) mit einem Träger (57) versehen ist, auf dem das U-Profilstück (57) ruhen kann, und dass der Pallettengreifer (52) ausfahrbare Ausleger (60) aufweist, welche in den Hohlraum im U-Profilstück (57) einführbar ist.

15. Lageranlage nach Anspruch 1, dadurch gekennzeichnet, dass die Betätigungseinrichtung eine Beschickungsvorrichtung (7) aufweist, welche wenigstens eine Reihe von Stempeln (67) zur Abstützung der Stücke (4) von Lagergut aufweist, dass diese Reihe von Stempeln sich in der Längsrichtung der Kassette (3) erstreckt, dass der jeweilige Stempel zwischen den benachbarten Zinken (50) angeordnet ist, wobei er in die Palette (3) von unten her hineinfahren kann, und dass die Stempel derart ausgeführt sind, dass sie bis zum oberen Rand der Kassette (3) ausfahrbar sind.

**Revendications**

1. Installation de stockage comportant au moins une palette (3) pour le produit à stocker, qui présente des jeux, disposés les uns derrière les autres, de lamelles (50) situées côte à côte, l'écartement des lamelles situées côté à côté étant pratiquement aussi grand que la largeur de l'une des pièces (4) du produit à stocker, à placer dans la palette, et comportant un dispositif de manoeuvre qui comprend un dispositif (10) de déplacement ou de transfert du produit à stocker (4), ce dispositif (10) présentant au moins une pince (20) pour les pièces (4) du produit à stocker, laquelle pince comporte des paires disposées l'une derrière l'autre de mâchoires (22, 23) allongées et disposées verticalement, caractérisée en ce que les mâchoires (22, 23) peuvent être abaissées à l'intérieur de la palette (3), en ce que la largeur de chaque mâchoire (22 ou 23) est inférieure à la largeur des lamelles (50) de la cassette (3), en ce que l'écartement des mâchoires est réglable, en ce que la longueur des mâchoires mobiles l'une par rapport à l'autre est telle qu'elles peuvent saisir aussi la pièce de matériel située tout en bas dans la palette, et en ce que les faces latérales opposées des mâchoires (22, 23) sont conformées pour saisir le produit à stocker (4).

2. Installation de stockage selon la revendication 1, caractérisée en ce qu'elle comporte des rayonnages (1) à cases (8) superposées, dans lesquels les palettes (3) peuvent être logées, en ce qu'il est prévu des allées (2) entre les rayonnages, en ce que le dispositif de manoeuvre comporte en outre un dispositif (5) de manutention des palettes (3), en ce que ce dispositif (5) comporte un chariot (51) se déplaçant au-dessus des rayonnages (1) et sur la face inférieure duquel est fixée une pince de palette (52) pouvant être abaissée, en ce que la pince de palette (52) est pourvue de moyens (60) destinés à saisir une palette (3), en ce que la pince de palette (52) peut être abaissée dans les allées (2) et en ce qu'au moins l'une des allées est réalisée de telle sorte que la pince de palette (52) puisse être abaissée dans celle-ci jusqu'au niveau du sol de l'installation de stockage.

3. Installation de stockage selon la revendication 1, caractérisée en ce que le dispositif de manoeuvre comporte un dispositif (6) de manutention du contenu (4) des palettes, en ce que ce dispositif (6) présente des tables (11, 12) de réception des palettes (3), en ce que plusieurs palettes (3) peuvent tenir les unes derrière les autres sur ces tables, en ce que les tables (11, 12) sont espacées l'une de l'autre de telle sorte qu'entre les tables (11, 12) se trouve un dispositif (30) de réception du produit stocké à traiter, en ce que le dispositif (10) de déplacement ou de transfert du matériel (4) est disposé au-dessus des parties terminales tournées l'une vers l'autre des tables (11, 12), et en ce qu'un poste (15) de traitement du produit stocké (4) est associé au dispositif de réception.

4. Installation de stockage selon la revendication 3, caractérisée en ce qu'au moins l'une des pinces de matériel (20) est associée à chacune des tables (11, 12), en ce que le dispositif de déplacement (10) comporte en outre des voies (16) de guidage de la pince du matériel (20), en ce que les voies de guidage (16) sont pratiquement parallèles aux faces frontales (58) des rayonnages (1), en ce que la pince (20) comporte un chariot (21) qui est parallèle la direction longitudinale de l'allée (2) entre les rayonnages (1), et en ce que les mâchoires de pince (22, 23) font saillie par rapport à la face inférieure du chariot (21).

5. Installation de stockage selon la revendication 4, caractérisée en ce que les distances séparant les paires de mâchoires (22, 23) disposées les unes derrière les autres dans la direction longitudinale du chariot (21), sont inférieures dans l'une des zones du chariot (21) à ce qu'elles sont dans la zone restante, ces distances pouvant être choisies telles qu'elles augmentent, en continu ou par à-coups, au fur et à mesure que l'on s'éloigne de l'une des zones terminales du chariot.

6. Installation de stockage selon la revendication 1, caractérisée en ce qu'une tringle (25) verticale et mobile, se trouve entre les mâchoires (22, 23) d'au moins l'une des paires de mâchoires, en ce que cette tringle (25) est conformée pour prendre appui sur l'objet (4) situé sur le dessus entre les mâchoires, et en ce que cette tringle (25) est raccordée à un dispositif qui sert à constater le nombre d'objets se trouvant entre les mâchoires.

7. Installation de stockage selon la revendication 3, caractérisée en ce que le dispositif de réception (30) comporte deux convoyeurs (31, 32), parallèles et qui s'étendent pratiquement entre la paroi frontale (F) et la paroi arrière des rayonnages (1), en ce que ces convoyeurs (31, 32) présentent un châssis (33) commun sur lequel ils sont fixés, en ce que chaque convoyeur (31 ou 32) comporte un jeu de rouleaux (34) disposés verticalement et placés dans une rangée, ainsi qu'un jeu de rouleaux (35) pratiquement horizontaux et formant aussi une rangée, et en ce que le châssis est réalisé de telle sorte qu'il peut se déplacer dans un mouvement de va-et-vient avec les convoyeurs (31, 32), entre les tables à rouleaux (11, 12).

8. Installation de stockage selon la revendication 7, caractérisée en ce que l'écartement des faces frontales (17) intérieures des tables à rouleaux (11, 12) est telle qu'il est supérieur à trois fois la largeur de l'un des convoyeurs (31 ou 32) et en ce que la partie d'entrée du poste de traitement (15) du produit stocké (4) se trouve pratiquement au milieu de la distance citée séparant les faces frontales (17) des tables à rouleaux.

9. Installation de stockage selon la revendication 1, caractérisée en ce que les distances séparant les jeux de lamelles (50) disposés côte à côte sont inférieures dans l'une des zones de la palette (3) à ce qu'elles sont dans la zone restante, ces distances pouvant être choisies telles qu'elles augmentent, en continu ou par à-coups, au fur et à mesure que l'on s'éloigne de l'une des zones terminales de la palette.

10. Installation de stockage selon la revendication 1, caractérisée en ce que la palette (3) comporte des parois latérales (41, 42), entre lesquelles se trouvent les lamelles (50) ou le jeux de lamelles, en ce que les parois latérales sont assemblées entre elles par des pièces de liaison (46) espacées l'une de l'autre, et en ce que les lamelles (50) sont disposées sur ces pièces de liaison.

11. Installation de stockage selon la revendication 10, caractérisé en ce que les pièces de liaison (46) ont une section transversale en U, les ailes (47) de ce profilé étant dirigées vers le bas, en ce que les lamelles (50) sont placées sur la face extérieure du dos (48) des pièces de liaison (46), la distance séparant deux lamelles se trouvant sur une pièce de liaison (46), ou séparant l'une de ces lamelles de la paroi latérale (41) ou (42) attenante, est au moins égale à l'épaisseur de l'objet à stocker se trouvant entre elles.

12. Installation de stockage selon la revendication 11, caractérisée en ce que la partie inférieure des lamelles (50) est fixée sur un patin (54), en ce qu'au moins une lamelle est fixé sur le patin (54), plusieurs lamelles pouvant être fixées côte à côte ou/et l'une derrière l'autre sur le patin, en ce que chaque lamelle peut être massive ou réalisée dans un profilé creux, et en ce que le patin (54) est fixé réglable et interchangeable sur le dos (48) de la pièce de liaison (46).

13. Installation de stockage selon la revendication 10, caractérisée en ce que les parois latérales (41, 42) sont façonnées par des bandes de tôle aux bords longitudinaux (43, 44) façonnées, en ce que ces parties (43, 44) façonnées sont placées sur la face extérieure de la palette, et en ce que les pièces de liaison (46) se raccordent au dos (45) qui assemble les parties de bordure (43, 44) façonnées des bandes de tôle (41, 42).

14. Installation de stockage selon la revendication 2, caractérisée en ce que la paroi frontale (56) concernée de la cassette (3) est pourvue d'une pièce profilée en U (57) s'ouvrant latéralement, en ce que la face intérieure de la paroi (58) du rayonnage est pourvue d'un support (57) sur lequel peut reposer la pièce profilée en U (57), en ce que la pince de palette (52) comporte des bras en porte-à-faux (60) pouvant être déployés et qui peuvent être introduits dans la cavité de la pièce profilée en U (57).

15. Installation de stockage selon la revendication 1, caractérisée en ce que le dispositif de manoeuvre comporte un dispositif de chargement (7) qui présente au moins une rangée de poinçons (67) destinés à soutenir les pièces (4) du produit à stocker, en ce que cette rangée de poinçons s'étend dans la direction longitudinale de la cassette (3), en ce que le poinçon concerné est disposé entre les lamelles (50) adjacentes, celui-ci pouvant pénétrer dans la palette (3) à partir du bas, et en ce que les poinçons sont réalisés de telle sorte qu'ils peuvent se déplacer jusqu'au bord supérieur de la cassette (3).

**Claims**

1. Storage installation having at least one pallet (3) for the storage goods, whereby said pallet comprises sets of dovetailings (50) placed one after the other, whereby each set comprises side by side placed dovetailings (50) and whereby the distance between the side by side placed dovetailings is practically as great as the width of one piece (4) of the storage goods to be placed in the pallet, and having a manipulation arrangement which comprises a device (10) for displacement or transference of storage goods, whereby this device (10) has at least one gripping apparatus (20) for the pieces (4) of the storage goods which comprises one after the other placed pairs of elongated and vertically arranged jaws (22, 23), characterised in that said jaws (22, 23) can be moved down into the interior of the pallet (3), that the width of the respective jaw (22, 23 resp.) is smaller than the width of one of the dovetailings (50) in the pallet (3), that the distance between the jaws can be changed, that the length of the jaws which are movable to each other is determined so that they can grip also that one piece of the storage goods which is placed right at the bottom of the pallet, and that the opposite side faces of the jaws (22, 23) are carried out for gripping the pieces of the storage goods.

2. The storage installation as claimed in claim 1 characterised in that shelves (1) with one upon the other placed compartments (8) are provided for in which pallets (3) can be placed, that passages (2) are provided for between the shelves, that the manipulation arrangement further comprises a device (5) for handling the pallets (3), that this device (5) comprises a carriage (51) movable over the shelves (1), that a gripping apparatus (52) for the pallets is arranged on the bottom side of the carriage which can be lowered, that the pallet gripping apparatus (52) comprises means (60) for gripping one pallet (3), that the pallet gripping apparatus can be lowered into the passages, and that at least one of said passages is carried out in such a manner that the pallet gripping apparatus (52) can be lowered in this passage as far as to the floor of the storage installation.

3. The storage installation as claimed in claim 1 characterised in that the manipulation arrangement comprises a device (6) for handling the content of the pallets, that this device (6) encompasses tables (11, 12) for reception of the pallets (3), that a number of the pallets (3) can be placed side by side on said tables, that said tables (11, 12) are positioned in a distance from each other, that a device (30) for reception of the storage goods to be treated is placed between the tables (11, 12), that the device (10) for displacement or transference is located over those end portions of the tables (11, 12) which are opposite to each other, and that a station (15) for treatment of the storage goods (4) is associated with the reception device (30).

4. The storage installation as claimed in claim 3 characterised in that at least one gripping apparatus (20) is associated with the respective table (11, 12), that the device (10) for displacement is also provided with paths (16) for guiding the gripping apparatusses (20), that said paths extend practically in parallel to the front sides (58) of the shelves (1), that the gripping apparatus (20) is provided with a carriage (21) which extends in parallel to the longitudinal direction of the passage (2) between said shelves (1), and that the gripping jaws (22, 23) protrude from the bottom side of the carriage (21).

5. The storage installation as claimed in claim 4 characterised in that the distances in the longitudinal direction of the carriage (21) between the pairs of the jaws (22, 23) are in one region of the carriage (21) smaller than in the remaining region thereof, whereby these distances can be determined in such a manner that they grow with the growing distance of one of the end portions of the carriage, namely steady or unsteady.

6. The storage installation as claimed in claim 1 characterised in that an adjustable rod (25) is placed between the jaws (22, 23) of at least one of said jaw pairs, whereby this rod is arranged vertically, that said rod (25) is carried out for resting on the uppermost item (4) between said jaws, and that said rod (25) is connected to a device serving for ascertainment of the number of the items (4) which are placed between the jaws.

7. The storage installation as claimed in claim 3 characterised in that the reception device (30) encompasses two conveying tracks (31, 32) which are arranged in parallel to each other and which extend practically between the front wall (F) and the rear wall of the shelves (1), that these tracks (31, 32) are provided with a common frame (33) on which they are placed, that each of the tracks (31, 32 resp.) comprises one set of vertically arranged rollers (34) forming a row and one further set of rollers (35) which are arranged in a practically horizontal plane and which also form a row, and that said frame is carried out in such a manner that it can be, together with said tracks (31, 32), moved to and fro between the roller tables (11, 12).

8. The storage installation as claimed in claim 8 characterised in that the distance between the inner front walls (17) of the roller tables (11, 12) is determined in such a manner that it is greater than three widths of one of the conveyor tracks (31, 32 resp.), and that the inlet section of the working station (15) for the storage goods (4) is placed practically in the middle of the distance between the front walls (17) of the tables.

9. The storage installation as claimed in claim 1 characterised in that the distances between the sets of the side by side laying dovetailings (50) are smaller in one of the sections of the pallet (3) than in the remaining section thereof, whereby these distances can be determined in such a manner that they grow with the growing distance from one of the end portions of the pallet, namely steady or unsteady.

10. The storage installation as claimed in claim 1 characterised in that the pallet (3) comprises side walls (41, 42) between which the dovetailings (50) or sets of the dovetailings are placed, that said side walls are joined together by aid of connecting pieces (46) which are spaced from each other, and that said dovetailings are arranged on these connecting pieces.

11. The storage installation as claimed in claim 10 characterised in that the cross section of the connecting pieces (46) is U-shaped, whereby the legs of this profile are directed downwards, and that the dovetailings (50) are secured on the outer side of the cross-piece (48) of said profile, whereby the distance between two dovetailings which are secured on the same connecting piece (46) or between one of these dovetailings and the neighbouring side wall (41, 42 resp.) is at least as great as the width of the item to be stored therebetween.

12. The storage installation as claimed in claim 11 characterised in that the lower part of the dovetailings (50) is secured on a foot plate (54), that at least one dovetailing is secured on said foot plate (54), whereby a number of the dovetailings can be secured on the foot plate side by side or/and one after the other, that the dovetailing can be of solid material or of a hollow profile, and that the foot plate (54) is on the cross-piece secured in an adjustable and exchangeable manner.

13. The storage installation as claimed in claim 10 characterised in that the side walls (41, 42) are formed as strips of a sheet-metal, that the longitudinal margins (43, 44) of said strips are shaped, that said shaped marginal portions (43, 44) are placed on the outer side of the pallet, and that the connective pieces (46) are joined to the crosspieces (45) connecting together the shaped marginal portions (43, 44).

14. The storage installation as claimed in claim 2 characterised in that the front wall (56) of the pallet (3) is provided with a profile piece (57) having U-shaped cross-section, that the interior side of the shelf-wall (58) is provided with a carrier (59) on which said U-profil (57) can rest, and that the pallet gripping apparatus (52) is provided with extendable arms (60) which can be introduced into the hollow space in the piece (57) having U-shaped cross-section.

15. The storage installation as claimed in claim 1 characterised in that the manipulation arrangement comprises a charging device (7), that this charging device is provided with a row of stamps (67) for supporting the items (4) of the storage goods, that said row of stamps extends in the longitudinal direction of the pallet (3), that the respective stamp is placed between the neighbouring dovetailings (50), whereby the stamp can enter the pallet (3) from below, and that the stamps are carried out in such a manner that they can be moved up to the upper rim of the pallet.

Fig. 1

Fig. 2

Fig. 3

Fig. 4

Fig. 5

Fig. 6

Fig. 7

Fig. 8

Fig. 9

EP 0 206 992 B1